# EUROPEAN PATENT SPECIFICATION

(11) **EP 3 028 123 B1**
(45) Date of publication and mention of the grant of the patent: **10.10.2018**
(21) Application number: 14831970.0
(22) Date of filing: 29.07.2014
(51) Int. Cl.: G06F 3/041, G06F 3/0488

(54) **ELECTRONIC DEVICE AND METHOD OF RECOGNIZING INPUT IN ELECTRONIC DEVICE**
ELEKTRONISCHE VORRICHTUNG UND VERFAHREN ZUR EINGABEERKENNUNG BEI EINER ELEKTRONISCHEN VORRICHTUNG
DISPOSITIF ÉLECTRONIQUE ET PROCÉDÉ DE RECONNAISSANCE D'ENTRÉE DANS UN DISPOSITIF ÉLECTRONIQUE

(30) Priority: 29.07.2013 KR 20130089296
(43) Date of publication of application: 08.06.2016
(73) Proprietor: Samsung Electronics Co., Ltd., Suwon-si, Gyeonggi-do 443-742 (KR)
(72) Inventor: KIM, Geonsoo, Suwon-si Gyeonggi-do 441-834 (KR)
(74) Representative: Nederlandsch Octrooibureau
(86) International application number: PCT/KR2014/006945
(87) International publication number: WO 2015/016585

(56) References cited:
- WO-A2-2007/089766
- WO-A2-2011/088134
- US-A1- 2011 148 821
- US-A1- 2011 210 934
- US-A1- 2012 262 407
- US-A1- 2013 187 867

## Description

### [Technical Field]

The present invention disclosure relates to an electronic device and a method of recognizing an input in the electronic device.

### [Background Art]

Utilization of a touch input for subjectively generating an input from various mobile devices such as a smart phone, a tablet Personal Computer (PC), or the like is gradually increasing.

The touch input may be generated by an input means such as a human body (e.g., a finger), a physical tool, a pen, or the like. and recently, Recently, a study of activating awareness of a multi-point input where according to which a plurality of inputs are generated is being progressed. Further, the current related art tends to allow a multi-point input using different types of input means by discriminating between inputs generated by the different types of input means.

One method among methods employed to recognize a type of input means is that all input pads which respectively detect inputs by the different types of input means are used. That is, it is possible to For example, the related art may divide input pads where at which an input has been detected and may determine a type of input by employing input pads on which one type of an input means may be detected for each of various types of input means. For example, in order to detect inputs respectively generated by a pen and a hand, the electronic device may respectively include an input pad for detecting a pen input and an input pad for detecting a hand input.

The above information is presented as background information only to assist with an understanding of the present disclosure. No determination has been made, and no assertion is made, as to whether any of the above might be applicable as prior art with regard to the present disclosure.

US 2012/0262407 A1 discloses touch and stylus discrimination and rejection for contact sensitive computing device.

### [Disclosure of Invention]

The present invention is defined by independent claims 1 and 10 with particular embodiments being represented by the corresponding dependent claims.

### [Technical Problem]

When the multi-point input is detected by different types of input means, a current an electronic device according to the related art employs only the input by one type of input means and excludes the inputs by different types of input means.

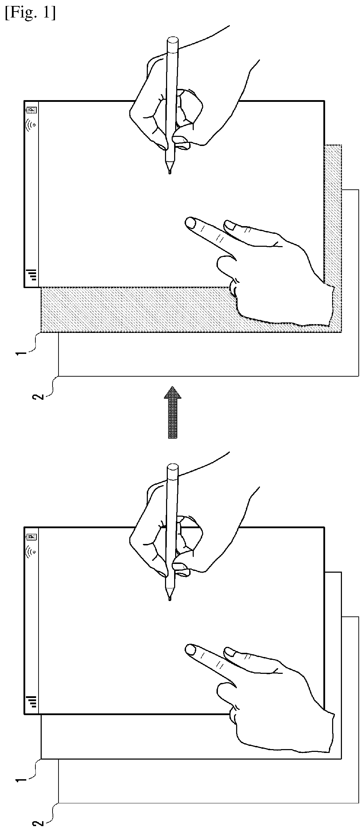

FIG. 1 illustrates a multi-point input recognition method according to the related art.

Specifically, referring to FIG. 1, the electronic device may include a first input pad 1 which detects a hand input, and a second input pad 2 which detects a pen input. When If a multi-point input including both the hand input and the pen input is generated, and then the first input pad 1 and the second input pad 2 detect the multi-point input., However, when the multi-point input is generated, the terminal rejects all hand inputs detected in the first input pad 1 and selects only the pen input detected in the second input pad 2 so that the pen input is preferentially processed.

Therefore, even though a current an electronic device according to the related art detects the multi-point input by various types of input means, the electronic device does not efficiently process the multi-point input when inputs are simultaneously generated by input means which are different from each other.

### [Solution to Problem]

Aspects of the present disclosure are to address at least the above-mentioned problems and/or disadvantages and to provide at least the advantages described below. Accordingly, an aspect of the present disclosure is to provide an electronic device and a method of recognizing an input in the electronic device.

In accordance with an aspect of the present disclosure, a method of inputting a multi-point input is provided. The method includes detecting a multi-point input generated by one or more types of input means, extracting a coordinate of the multi-point input, excluding at least one coordinate among the extracted coordinates, determining whether a hovering state of a first input means among one or more types of input means is detected, configuring an additional recognition area based on a hovering point of the first input means when the hovering state has been detected, and performing a function according to an operation corresponding to the coordinate in the additional recognition area.

In accordance with another aspect of the present disclosure, an electronic device is provided. The electronic device includes an input unit configured to detect a multi-point input generated by one or more types of input means, and a controller configured to extract a coordinate of the multi-point input, to exclude at least one coordinate among the extracted coordinates, to configure an additional recognition area based on a hovering point of a first input means when a hovering state of the first input means among one or more types of input means has been detected, and to perform a function according to an operation corresponding to the coordinate in the additional recognition area.

An electronic device and an input recognition method of the electronic device according to the present disclosure detects an input by various input means and provides the additional recognition area so that diverse commands can be simply executed by a combination of various inputs to easily and conveniently use the electronic device.

### [Advantageous Effects of Invention]

The present disclosure detects a multi-point input generated by various input means and provides an additional recognition area to the electronic device by detecting hovering state of the input means.

### [Brief Description of Drawings]

The above and other objects, features, and advantages certain embodiments of of the present disclosure will be more apparent from the following description taken in conjunction with the accompanying drawings, in which:
FIG. 1 illustrates a multi-point input recognition method according to the related art;
FIG. 2 is a block diagram illustrating an electronic device according to an embodiment of the present disclosure;
FIG. 3 illustrates a configuration of an input unit according to an embodiment of the present disclosure;
FIG. 4 is a flow chart illustrating an input recognition method according to an embodiment of the present disclosure;
FIG. 5 illustrates a detected input according to an embodiment of the present disclosure;
FIG. 6 illustrates an additional recognition area configuration according to an embodiment of the present disclosure; and
FIGS. 7, 8, 9, 10A, and 10B illustrate operations within an additional recognition area according to an embodiment of the present disclosure.

Throughout the drawings, it should be noted that like reference numbers are used to depict the same or similar elements, features, and structures.

### [Mode for the Invention]

The following description with reference to the accompanying drawings is provided to assist in a comprehensive understanding of various embodiments of the present disclosure as defined by the claims and their equivalents. It includes various specific details to assist in that understanding but these are to be regarded as merely exemplary. Accordingly, those of ordinary skill in the art will recognize that various changes and modifications of the various embodiments described herein can be made without departing from the scope of the present disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the present disclosure. Accordingly, it should be apparent to those skilled in the art that the following description of various embodiments of the present disclosure is provided for illustration purpose only and not for the purpose of limiting the present disclosure as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

According to various embodiments of the present disclosure, an electronic device may include communication functionality. For example, an electronic device may be a smart phone, a tablet Personal Computer (PC), a mobile phone, a video phone, an e-book reader, a desktop PC, a laptop PC, a netbook PC, a Personal Digital Assistant (PDA), a Portable Multimedia Player (PMP), an mp3 player, a mobile medical device, a camera, a wearable device (e.g., a Head-Mounted Device (HMD), electronic clothes, electronic braces, an electronic necklace, an electronic appcessory, an electronic tattoo, or a smart watch), and/or the like.

According to various embodiments of the present disclosure, an electronic device may be a smart home appliance with communication functionality. A smart home appliance may be, for example, a television, a Digital Video Disk (DVD) player, an audio, a refrigerator, an air conditioner, a vacuum cleaner, an oven, a microwave oven, a washer, a dryer, an air purifier, a set-top box, a TV box (e.g., Samsung HomeSync™, Apple TV™, or Google TV™), a gaming console, an electronic dictionary, an electronic key, a camcorder, an electronic picture frame, and/or the like.

According to various embodiments of the present disclosure, an electronic device may be a medical device (e.g., Magnetic Resonance Angiography (MRA) device, a Magnetic Resonance Imaging (MRI) device, Computed Tomography (CT) device, an imaging device, or an ultrasonic device), a navigation device, a Global Positioning System (GPS) receiver, an Event Data Recorder (EDR), a Flight Data Recorder (FDR), an automotive infotainment device, a naval electronic device (e.g., naval navigation device, gyroscope, or compass), an avionic electronic device, a security device, an industrial or consumer robot, and/or the like.

According to various embodiments of the present disclosure, an electronic device may be furniture, part of a building/structure, an electronic board, electronic signature receiving device, a projector, various measuring devices (e.g., water, electricity, gas or electro-magnetic wave measuring devices), and/or the like that include communication functionality.

According to various embodiments of the present disclosure, an electronic device may be any combination of the foregoing devices. In addition, it will be apparent to one having ordinary skill in the art that an electronic device according to various embodiments of the present disclosure is not limited to the foregoing devices.

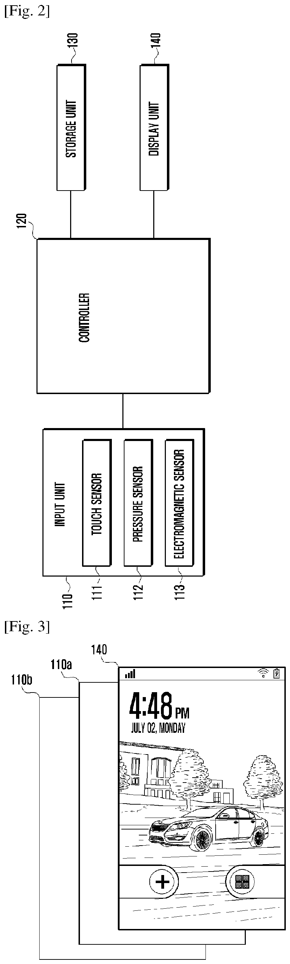

FIG. 2 is a block diagram illustrating an electronic device according to an embodiment of the present disclosure.

Referring to FIG. 2, an electronic device 100 may include an input unit 110, a controller 120, a storage unit 130, and a display unit 140.

The input unit 110 may include a touch sensor 111, a pressure sensor 112, an electromagnetic sensor 113, and/or the like.

The touch sensor 111 may detect a user's touch input. The touch sensor 111 may have a type such as a touch film, a touch sheet, a touch pad, and/or the like. Further, the touch sensor 111 may detect a touch input and transmit a detected touch signal to a controller 120.

The controller 120 may perform an operation corresponding to the touch signal by analyzing the touch signal. Further, information corresponding to the detected touch signal may be displayed on the display unit 140. The touch sensor 111 may receive an input of an operating signal according to the user's touch input by various input means. The touch sensor 111 may receive the input of the operating signal by a user's body (e.g., a hand), a physical tool, a stylus pen, an operating button which can be included in the stylus pen, and/or the like. The touch sensor 111 may detect not only a direct touch but also a proximity input within a predetermined distance.

The pressure sensor 112 may detect whether a pressure is applied to the electronic device 100, a size of the pressure, and/or the like. The pressure sensor 112 may be installed in a region required for the detection of the pressure in the electronic device 100 according to a user environment. If the pressure sensor 112 is installed in the display unit 140, then an input through the display unit 140 may be identified according to a signal output from the pressure sensor 112.

The electromagnetic sensor 113 may detect a touch or proximity input according to a change of electromagnetic field intensity. The electromagnetic sensor 113 may include a coil inducing a magnetic field and may detect an approach of an object including a resonance circuit causing an energy change of a magnetic field generated from the electromagnetic sensor 113. The electromagnetic sensor 113 may be an object including the resonance circuit such as a stylus pen, and/or the like. The electromagnetic sensor 113 may detect not only an input which directly contacts to the electronic device 100 but also a proximity input or a hovering which are performed close to the electronic device 100.

The input unit 110 may include an input pad. The input unit 110 may be configured to mount the touch sensor 111, the pressure sensor 112, the electromagnetic sensor 113, and/or the like on an input pad. The input unit 110 may be configured such that an input pad in which the touch sensor 111 or the pressure sensor 112 is attached to the input pad with a film type or is combined with a panel type. Alternatively, the input unit 110 may include an Electro Magnetic Resonance (EMR) type input pad, an Electro Magnetic Interference (EMI) type input pad, and/or the like, which uses the electromagnetic sensor 113. The input unit 110 may include one or more input pads forming a cross-layer structure to detect an input by using a plurality of sensors.

The input unit 110 may form a layer structure along with the display unit 140 to operate as an input screen. For example, the input unit 110 may be configured of a Touch Screen Panel (TSP) including an input pad having the touch sensor 111 and may be connected with the display unit 140. Further, the input unit 110 may include the input pad having the electromagnetic sensor 113 and may be configured to combine with the display unit 140 having the display panel.

FIG. 3 illustrates a configuration of an input unit according to an embodiment of the present disclosure.

Referring to FIGS. 2 and 3, the input unit 110 may include a first input pad 110a and a second input pad 110b forming a cross-layer structure. The first input pad 110a and the second input pad 110b may be a touch pad having the touch sensor 111 and the pressure sensor 112, a pressure pad, an electromagnetic pad having the electromagnetic sensor 113, and an electromagnetic radiation (EMR) pad. The first input pad 110a and the second input pad 110b correspond to input means which are different from each other and may respectively detect an input generated by the different input means. For example, the first input pad 110a is the EMR pad and may detect an input by a pen. The second pad 110b is the touch pad and may detect a touch input by a user's body. The input unit 110 may detect inputs respectively generated from the first input pad 110a and the second input pad 110b.

The input unit 110 may form a layer structure along with the display unit 140. The first input pad 110a and the second input pad 110b are located on a lower display unit 140 so as to detect an input generated by an icon, a menu, a button, and/or the like which are displayed in the display unit 140 through the first input pad 110a and the second input pad 110b. The display unit 140 may generally have a display panel type and may be configured as a Touch Screen Panel (TSP) combined with the input pad.

The input unit 110 may detect a multi-point input generated by multiple types of input means. The multiple types of input means may be, for example, a human body (especially, a hand), a physical tool, a stylus pen, and/or the like. The multi-point input refers to two or more inputs which are generated by one type of an input means or various types of input means. For example, the multi-point input may refer to two or more inputs which are generated by a plurality types of input means. The input unit 110 may detect not only the multi-point input but also a proximity input, a hovering, and/or the like.

The controller 120 may control all structural elements for general operations of the electronic device 100.

The controller 120 may control an operation or a function of the electronic device 100 according to an input detected by the input unit 110. The controller 120 may analyze the detected multi-point input through the input unit 110. The controller 120 may analyze a generating position of each input included in the multi-point input and a type of input means. In addition, the controller 120 may extract (e.g., determine) a coordinate of the multi-point input on a basis of the input means of the multi-point input and the generating position of the input. Specifically, the controller 120 may extract an element which represents whether the detected input is generated on a position of the electronic device 100 or whether the detected input is generated in a distance apart from the electronic device 100. The controller 120 may extract a coordinate of the detected input. For example, the controller 120 may extract a two-dimensional coordinate or a three-dimensional coordinate corresponding to the detected input according to whether the detected input is generated on a position of the electronic device 100 or whether the detected input is generated in a distance apart from the electronic device 100. Further, the controller 120 may extract an element representing an input means as a coordinate. In this event, the controller 120 may extract a coordinate which represents a type of the input means on the basis of whether the input signal is detected through an input pad among a plurality of input pads included in the input unit 110.

The controller 120 may perform an operation which rejects a coordinate related to a palm area among the extracted input coordinates. For example, a palm rejection operation of excluding the coordinates related to the palm area refers to an operation of extracting coordinates of the palm area contacted to many areas of the input unit 110 and excluding the coordinates of the palm area from the input when a user contacts to the input unit 110 while holding a pen among the input means. In other words, the controller 120 excludes at least one consecutive coordinate forming an area which is larger than or equal to a predetermined critical dimension such as, for example, the palm area.

The controller 120 may exclude a coordinate related to the palm area among input coordinates extracted based on the generating position and the input means which are elements of the extracted coordinate. The controller 120 may exclude at least one coordinate among coordinates corresponding to other input means based on a coordinate corresponding to a specific input means. For example, the controller 120 may exclude a coordinate of an input generated by the palm based on a coordinate of an input generated by the pen.

The controller 120 may perform an operation corresponding to the remaining coordinates excluding the coordinate related to the palm area. To this end, the controller 120 determines whether an input means among a plurality of input means (e.g., a pen, a hand, or the like) is in a hovering state. When an input means among the plurality of input means is not in the hovering state, the controller 120 performs an operation corresponding to the remaining coordinates excluding the coordinates related to the palm area.

The controller 120 may perform an operation corresponding to the extracted coordinates. The controller 120 may perform an operation corresponding to the remaining coordinates excluding at least one coordinate. The controller 120 may perform at least one operation (e.g., a zoom in operation, a zoom out operation, a drag operation, a copy operation, a shortcut icon display operation, a menu display operation, a switching operation of types such as a pen, an eraser, and/or the like, and a driving operation of a specific program/application, and/or the like).

When an input means among the plurality of input means is in the hovering state, the controller 120 configures an additional recognition area based on a point at which the input means is in a hovering state. A predetermined area is configured as the additional recognition area with respect to the point at which the input means is in a hovering state.

The controller 120 may determine whether there is an operation by an input means within the additional recognition area when the additional recognition area is configured and may perform the operation within the additional recognition area. The controller 120 may determine an operation corresponding to the detected other input and may perform the operation. In this event, an input means among the plurality of input means is in the hovering state. When an input means among the plurality of input means is in the hovering state and, in the hovering state, the input means moves to another coordinate or another input means generates an input by a direct touch in the additional recognition area, an operation corresponding to such an input is performed.

For example, when an input means among the plurality of input means is referred to as a first input means and another input means is referred to as a second input means, an operation of the electronic device 100 will be described below.

Coordinates of the first input means and the second input means are extracted. In this event, if the first input means is a physical tool such as a pen, a palm area recognized together with the first input means by an input unit 110 when the first input means is held by a user is excluded.

When the first input means is not in the hovering state, an operation corresponding to the coordinate may be performed based on a multi-point input of the first input means and the second input means. For example, the controller 120 may perform at least one operation (e.g., a zoom in operation, a zoom out operation, a drag operation, a copy operation, a shortcut icon display operation, a menu display operation, a switching operation of types such as a pen, an eraser, and/or the like, a driving operation of a specific program/application, and/or the like).

When the first input means is detected as the first input means is in the hovering state, the predetermined area of the input unit 110 is configured as the additional recognition area based on the position at which the first input means performs the hovering. A flick operation of moving the first input means upwards, downwards, leftwards, or rightwards when the first input means is in the hovering state within the additional recognition area, an operation of moving the first input means to another coordinate when the first input means is in the hovering state, and a multi-point input operation in which the second input means touches the input unit 110 when the first input means is in the hovering state may be performed.

For example, if the flick operation of moving the first input means upwards, downwards, leftwards, or rightwards occurs when the first input means is in the hovering state, the controller 120 can switch a menu display, an icon display or a pen type, copy an image of a point at which the operation of moving the first input means to another coordinate when the first input means is in the hovering state starts, and then move the image to a point at which the moving operation is finished. If an operation, in which the second input means scrapes or rubs the additional recognition area with a single touch, occurs when the first input means is in the hovering state, an image may be blurred or erased. Further, when the first input means is in the hovering state, in a case in which the second input means pinch zooms in or pinch zooms out the additional recognition area by a multi-touch, the image may enlarged or reduced.

The storage unit 130 may store a program or commands for the electronic device 100. The controller 120 may perform the program or commands stored in the storage unit 130. The storage unit 130 may include at least one type of storage medium of a flash memory type, a hard disk type, a multimedia card micro type, a card type memory (e.g., an SD memory, an XD memory or the like), a Random Access Memory (RAM), a Static RAM (SRAM), a Read-Only Memory (ROM), an Electrically Erasable Programmable ROM (EEPROM), a PROM, a magnetic memory, a magnetic disk, and an optical disk.

The storage unit 130 may temporarily or permanently store an extracted coordinate with respect to the multi-point input. In addition, the storage unit 130 may store information on an operation corresponding to an extracted predetermined coordinate with respect to the input. The storage unit 130 may store information on a name of a program/application, a position of a driver file, a related image, an icon, a User Interface (UI), and/or the like which correspond to the coordinate. The storage unit 130 may store the coordinate as a value representing a critical range but not a specific value.

The display unit 140 displays (outputs) the information processed in the electronic device 100. For example, the display unit 150 may display a User Interface (UI) related to a voice detecting, context awareness, and a function control, or a Graphic User Interface (GUI).

The display unit 140 may include at least one of a Liquid Crystal Display (LCD), a Thin Film Transistor-Liquid Crystal Display (TFT LCD), an Organic Light-Emitting Diode (OLED) display, a flexible display, a 3D display, and/or the like.

The display unit 140 may operate as a touch screen forming a cross-layer structure with the touch sensor included in the input unit 110. In this event, the display unit 140 operating as the touch screen may perform a function of an input device. The display unit 140 may display an input trajectory or information, and/or the like which correspond to the multi-point input. Further, the display unit 140 may display a screen as a result of performing an operation of the controller 120 corresponding to the coordinate of the multi-point input.

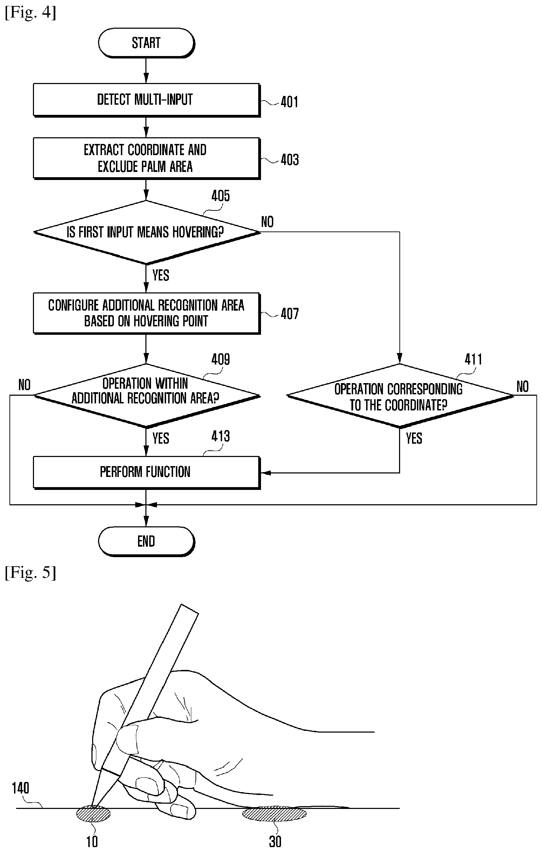

FIG. 4 is a flow chart illustrating an input recognition method according to an embodiment of the present disclosure.

Referring to FIG. 4, at operation 401, an electronic device 100 may detect a multi-point input.

The multi-point input may be configured as a plurality of inputs. Further, the multi-point input may be configured as a plurality of inputs generated by a plurality of input means. According to various embodiments of the present disclosure, the multi-point input may be simultaneously or sequentially generated. The electronic device 100 may detect the simultaneously or sequentially generated multi-point input. In other words, the electronic device 100 may detect the multi-point input which is simultaneously or sequentially generated and continues with a state in which the input is maintained.

The electronic device 100 may detect the multi-point input through a plurality of input pads which respectively correspond to a type of input means. Referring to FIG. 3, the electronic device may include the plurality of input pads 110a and 110b configuring a layer structure. The plurality of input pads 110a and 110b may respectively correspond to the type of input means. For example, the first input pad 110a may correspond to a stylus pen as the first input means and the second input pad 110b may correspond to a pen as the second input means. The electronic device 100 may detect a plurality of pen inputs through the first input pad 110a and may detect a plurality of hand inputs through the second input pad 110b.

The electronic device 100 may detect whether the multi-point input touches/approaches, a specific operation (e.g., a pointing operation, a click operation, a drag operation, a sweep operation, or an operation of forming a predetermined trajectory), a generating position, a pressure, a corresponding operation, or the like with respect to the multi-point input.

At operation 403, the electronic device 100 may extract a coordinate and exclude a palm area when the multi-point input is detected.

The electronic device 100 may extract a coordinate of the multi-point input. The electronic device 100 may extract a coordinate with respect to each input configuring the multi-point input based on the input means and the generating position of the multi-point input.

For example, the electronic device 100 may extract two-dimensional coordinates x and y including elements representing the generating position of the input. In this event, when the input corresponds to a proximity input, the electronic device 100 may extract three-dimensional coordinates x, y, and z including a distance from the electronic device 100 to the input. The electronic device 100 may form a two-dimensional coordinate system having an x-axis and a y-axis with a center of the plurality of input pads 110a and 110b as an origin and may extract a coordinate corresponding to a generating point of the input as the two-dimensional coordinates x and y.

For example, the electronic device 100 may extract a coordinate which includes elements representing the input means. The electronic device 100 may extract a one-dimensional to multidimensional coordinates according to a type of detectable input means. The electronic device 100 may assign a number corresponding to the detectable input means and may extract a coordinate. When the electronic device 100 detects an input of the plurality of types of input means through the plurality of input pads, the electronic device 100 may assign a number corresponding to the pad at which the input is detected and may extract a coordinate.

The electronic device 100 may extract a multidimensional coordinate based on the generating position of the input and the input means. For example, the electronic device 100 may extract the three-dimensional coordinates x, y, and z based on elements x and y representing the generating position of the input and element z representing the input means.

When a plurality of inputs are detected by one type of input means, the electronic device 100 may extract a coordinate based on a generating order, a generating position, and/or the like of an input. For example, the electronic device 100 may assign numbers corresponding to a plurality of inputs by one type of an input means so that the numbers can be used as elements of the coordinate or a number, an index, and/or the like indicating the coordinate can be used as coordinate information/coordinate name.

The coordinate as described above is only an example and may be variously changed according to of an application method of various embodiments of the present disclosure.

Next, the electronic device 100 may perform an operation of excluding at least one area based on the extracted coordinate. Specifically, the electronic device 100 may exclude at least one coordinate among coordinates corresponding to other input means based on a coordinate corresponding to a reference input means.

For example, the electronic device 100 may exclude at least one coordinate among coordinates of a hand input which is the second input means based on a coordinate of a pen input which is the first input means.

FIG. 5 illustrates a detected input according to an embodiment of the present disclosure.

Referring to FIG. 5, when a user generates a pen input 10 using the first input means, an unnecessary hand input 30 in which the user does not intend may be generated because a hand holding a pen touches the electronic device 100. When the electronic device 100 can only detect an input by one type of an input means, the unnecessary hand input 30 does not matter. However, when the electronic device detects both the hand input and the pen input in order to utilize various input means, the electronic device 100 may not be able to exactly recognize the multi-point input by the unnecessary hand input 30. Therefore, the electronic device 100 can perform a proper operation using a coordinate which excludes the unnecessary hand input 30 and is configured with only a valid input by considering a user hand operation at the time of a general input. In other words, the electronic device 100 may be operated according to a coordinate which excludes a palm area which is the unnecessary hand input 30 and is configured with a valid input by considering the user hand operation at the time of the general input.

At operation 405, the electronic device 100 determines whether a first input means is hovering. For example, at operation 405, the electronic device 100 determines whether a pen input, which is the first input means, is in the hovering state.

First, a hovering refers to a state in which a pen does not touch a screen and is spaced apart by a predetermined interval from a user device where a pen is used. For example, the hovering corresponds to a case in which a distal end of the pen is located at a position spaced apart by a predetermined interval, for example, 1 to 2 cm, from the display unit 140.

If the electronic device 100 determines that the first input means is not hovering at operation 405, then the electronic device 100 may proceed to operation 411. For example, when the pen input, which is the first input means, is not in the hovering state, the electronic device 100 proceeds to operation 411

At operation 411, the electronic device 100 may determine whether an operation corresponding to the coordinates exists based on the extracted coordinates. In this event, the electronic device 100 may determine whether an operation corresponding to the coordinates exists based on the remaining extracted coordinates except for at least one coordinate (except for the palm area).

The electronic device 100 may store information on the operation corresponding to the extracted coordinates. The storage unit 100 may store information on a name of program/application, a position of a driver file, a related image, an icon, a user interface (UI), and/or the like which correspond to the coordinates. The electronic device 100 may store the coordinates as a value representing a critical range but not a specific value. The storage unit 100 may store a mapping of operations to coordinates. The storage unit 100 may store the mapping of the operation to the coordinates in a look up table.

If the electronic device 100 determines that an operation does not correspond to the coordinates at operation 411, then the electronic device 100 may end the input recognition method. Alternatively, if the electronic device 100 determines that an operation does not correspond to the coordinates at operation 411, then the electronic device 100 may poll for a detection of an input and/or a multi-input.

In contrast, if the electronic device 100 determines that the operation corresponding to the coordinates exists at operation 411, then the electronic device 100 may proceed to operation 413 at which the electronic device 100 may perform a corresponding function.

The operation corresponding to the coordinates is an operation assigned with respect to a multi-point input generated by various types of input means and may be an operation which is different from a multi-point input by one type of an input means. Further, the electronic device 100 may perform a function according to an operation corresponding to the coordinate. For example, the operation may be at least one among a zoom in operation, a zoom out operation, a drag operation, a copy operation, a shortcut icon display operation, a menu display operation, a pen/eraser switching operation, or a driving operation of a specific program.

If the electronic device 100 determines that the first input means is hovering at operation 405, then the electronic device 100 may proceed to operation 407. For example, when the pen input, which is first input means, is in the hovering state, the electronic device 100 proceeds to operation 407.

At operation 407, the electronic device 100 configures an additional recognition area based on a hovering point of the first input means. Thereafter, the electronic device 100 proceeds to operation 409.

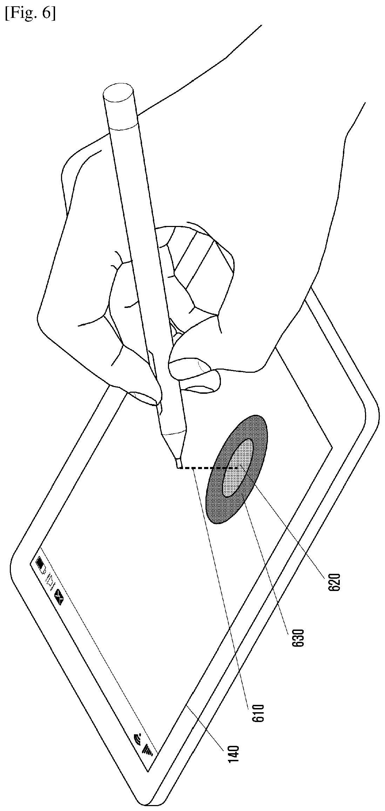

FIG. 6 illustrates an additional recognition area configuration according to an embodiment of the present disclosure.

Referring to FIG. 6, the electronic device 100 detects a hovering area 620 around a point 610 at which a distal end of the first input means is located and provides an additional recognition area 630 around the hovering area 620. The additional recognition area 630 includes the hovering area 620 around a reference point 610. The additional recognition area 630 may be provided around the hovering area 620 to conveniently recognize inputs of the first input means and the second input means in a hovering state but not a direct connection between the first input means and the input unit 140.

At operation 409, the electronic device 100 determines whether an operation corresponding to coordinates exists within the additional recognition area 630 based on the extracted coordinates.

The electronic device 100 may store information on the operation corresponding to the extracted coordinates. The electronic device 100 may store information on a name of a program/application, a position of a driver file, a related image, an icon, a user interface (UI), and/or the like which correspond to the coordinates. The electronic device 100 may store the coordinates as a value representing a critical range but not a specific value.

The operation corresponding to the coordinate within the additional recognition area 630 is an operation assigned with respect to a multi-point input generated by various types of input means and may be an operation which is different from a multi-point input by one type of an input means. Further, the operation corresponding to the coordinate within the additional recognition area 630 may be an operation assigned based on a type of the input means and a number of inputs corresponding to input means.

If the electronic device 100 determines that an operation corresponding to coordinates does not exist within the additional recognition area 630 based on the extracted coordinates at operation 409, then the electronic device 100 may end the input recognition method. Alternatively, if the electronic device 100 determines that an operation corresponding to coordinates does not exist within the additional recognition area 630 based on the extracted coordinates at operation 409, then the electronic device 100 may poll for a detection of an input and/or a multi-input.

In contrast, if the electronic device 100 determines that an operation corresponding to coordinates exists within the additional recognition area 630 based on the extracted coordinates at operation 409, then the electronic device 100 may proceed to operation 413 at which the electronic device 100 performs a corresponding function.

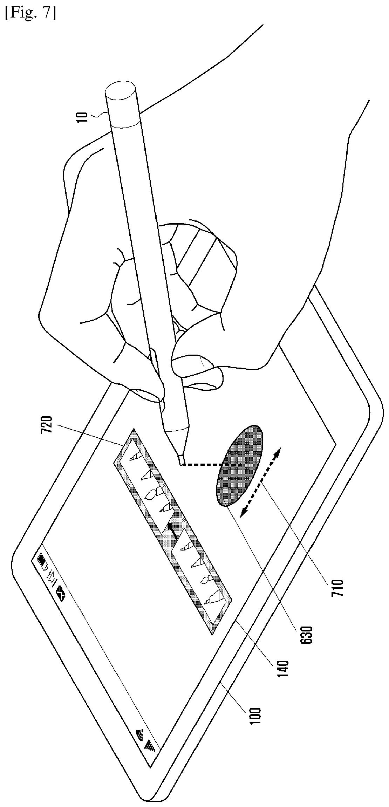

FIGS. 7, 8, 9, 10A, and 10B illustrate operations within an additional recognition area according to an embodiment of the present disclosure.

Referring to FIGS. 7 to 10, the operation corresponding to the coordinate within the additional recognition area 630 will be described below.

Referring to FIG. 7, if a flick operation 710 which moves a first input means 10 upwards, downwards, leftwards, and rightwards within the additional recognition area 630 when the first input means 10 is in a hovering state is generated, then the electronic device 100 may perform a function of switching a menu display, an icon display, or a pen type (as indicated by reference number 720) at operation 413.

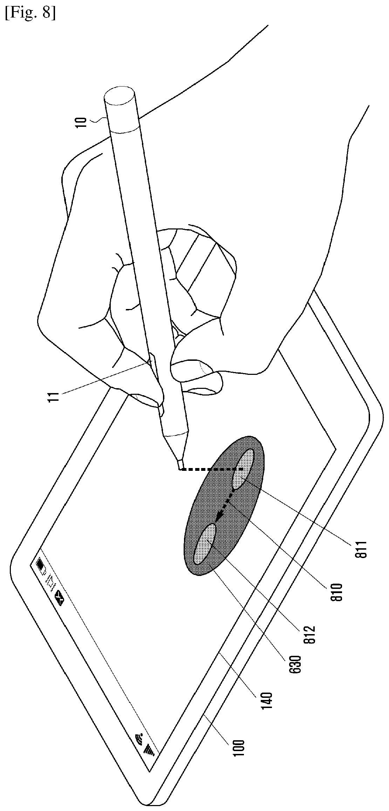

Referring to FIG. 8, if an operation 810 which moves a first input means 10 to another coordinate within the additional recognition area 630 when the first input means 10 is in a hovering state is generated, then the electronic device 100 may copy an image at a point 811 at which a movement starts and then move the image to a point 812 at which the movement ends at operation 413. In other words, when the first input means 10 moves in a particular direction, an image or a text may be copied and pasted. In this event, a movement signal may be received by an operation button 11, or the like which can be included in the first input means 10. For example, if a user presses the operation button 11 at the point 811 at which the movement starts, then the electronic device 100 is recognized that an image is copied and moves. If the user moves the first input means 10 and again presses the operation button 11 at the point 812 at which the movement ends, then the image can move to the point 812 at which the movement ends.

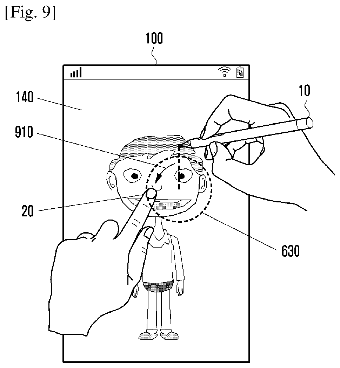

Referring to FIG. 9, if an operation 910 of scraping or rubbing with a single touch is generated by the second input means 20 within the additional recognition area 630 when the first input means 10 is in the hovering state, then the electronic device 100 may perform a function of erasing an image or blurring an image at operation 413.

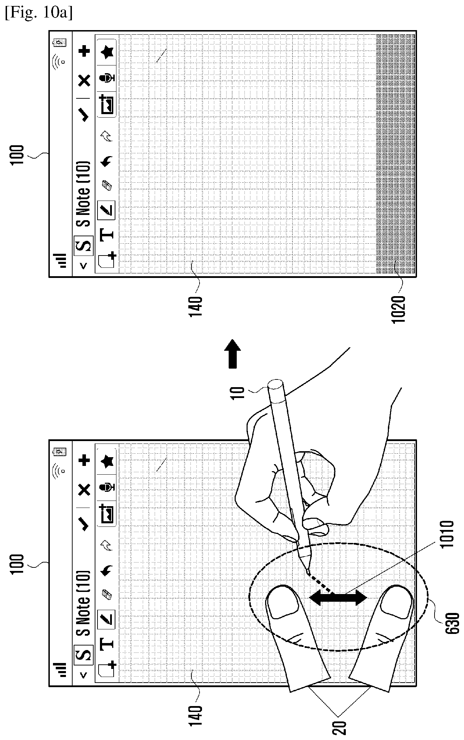

Referring to FIG. 10A, if an operation 1010 of pinch zooming in a lower display unit 140 with a multi touch is generated by the second input means 20 within the additional recognition area 630 when the first input means 10 is in a hovering state, then the electronic device 100 may perform a function 1020 of adding a display area in the display unit 140 at operation 413.

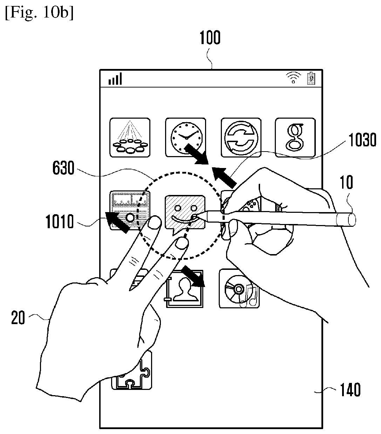

Referring to FIG. 10B, if an operation 1010 of pinch zooming in or an operation 1030 of pinch zooming out with a multi touch is generated by the second input means 20 within the additional recognition area 630 when the first input means 10 is in the hovering state, then the electronic device 100 may perform a function of enlarging or reducing the image at operation 413.

If an operation corresponding to the coordinate exists within the additional recognition area 630, then the electronic device 100 may perform a function at operation 413.

It will be appreciated that various embodiments of the present disclosure according to the claims and description in the specification can be realized in the form of hardware, software or a combination of hardware and software.

Any such software may be stored in a non-transitory computer readable storage medium. The non-transitory computer readable storage medium stores one or more programs (software modules), the one or more programs comprising instructions, which when executed by one or more processors in an electronic device, cause the electronic device to perform a method of the present disclosure.

Any such software may be stored in the form of volatile or non-volatile storage such as, for example, a storage device like a Read Only Memory (ROM), whether erasable or rewritable or not, or in the form of memory such as, for example, Random Access Memory (RAM), memory chips, device or integrated circuits or on an optically or magnetically readable medium such as, for example, a Compact Disk (CD), Digital Versatile Disc (DVD), magnetic disk or magnetic tape or the like. It will be appreciated that the storage devices and storage media are various embodiments of non-transitory machine-readable storage that are suitable for storing a program or programs comprising instructions that, when executed, implement various embodiments of the present disclosure. Accordingly, various embodiments provide a program comprising code for implementing apparatus or a method as claimed in any one of the claims of this specification and a non-transitory machine-readable storage storing such a program.

While the present disclosure has been shown and described with reference to various embodiments thereof, it will be understood by those skilled in the art that various changes in form and details may be made therein without departing from the scope of the present disclosure as defined by the appended claims and their equivalents.

## Claims

1. A method for inputting a multi-point input, the method comprising:
detecting a multi-point input generated by a first of input means;
extracting coordinates of the multi-point input;
excluding at least one coordinate from the coordinates;
determining whether a hovering state of the first input means is detected;
when the hovering state has been detected over a hovering point, configuring a recognition area based on the hovering point;
determining a direction that the first input means is displaced within the recognition area;
determining a function associated with the direction; and
performing the function.

2. The method of claim 1, wherein the excluding of the at least one coordinate comprises:
excluding at least one coordinate among coordinates corresponding to a second input means based on a coordinate corresponding to the first input means.

3. The method of claim 2, wherein the excluding of the at least one coordinate comprises:
excluding at least one consecutive coordinate forming an area which is larger than or equal to a pre-configured threshold area.

4. The method of claim 1, wherein the detecting of the multi-point input comprises:
detecting the multi-point inputs simultaneously or sequentially generated all together.

5. The method of claim 2, further comprising detecting movement of the second input means while the first input means is within the recognition area.

6. The method of claim 1, wherein the performing of the function comprises:
performing at least one function among functions of switching an icon display, a menu display, or a pen type according to the flick operation of the first input means; and
copying and pasting an image or a text according to the operation in which the first input means moves in the specific direction.

7. The method of claim 5, wherein the movement of the second input means comprises at least one of a single touch operation of the second input means and a multi touch operation of the second input means.

8. The method of claim 7, wherein the performing of the function comprises:
erasing an image or blurring an image according to the single touch operation of the second input means; and
expanding a user's input area, or enlarging or reducing an image according to the multi touch operation of the second input means.

9. The method of claim 1, further comprising:
detecting an input generated by a second input means , and in response to detecting the input by the second input means,
performing an operation corresponding to the input of the second input means.

10. An electronic device (100) comprising:
an input unit (110) configured to detect a multi-point input generated by a first input means; and
a controller (120) configured to:
extract coordinates of the multi-point input,
exclude at least one coordinate from the coordinates,
determine whether a hovering state of the first input means is detected,
when the hovering state is detected over a hovering point, configure a recognition area based on the hovering point,
determine a direction that the first input means is displaced within the recognition area,
determine a function associated with the direction, and
perform the function.

11. The electronic device of claim 10,
wherein the controller is further configured to exclude coordinates associated with a second input means.

12. The electronic device of claim 10,
wherein the input unit includes one or more input pads, and
wherein the input unit is further configured to detect the multi-point input through the one or more input pads.

13. The electronic device of claim 10,
wherein the controller is further configured to extract and exclude at least one consecutive coordinate forming an area which is larger than or equal to a pre-configured threshold area.

14. The electronic device of claim 13,
wherein the input unit is further configured to:
detect movement of the first input means in the hovering state, or
detect movement of the second input means while the first input means is in the hovering state,
wherein the controller is further configured to :
when a coordinate movement operation of the detected first input means corresponds to a flick operation, switch at least one of an icon display, menu display, and a pen type,
when the a coordinate movement operation of the detected first input means corresponds to movement in a specific direction, copy and paste an image or a text,
when a coordinate movement operation of the detected second input means corresponds to a single touch operation, erase an image or blurring an image, and
when the coordinate movement operation of the detected second input means corresponds a multi-touch operation, expand a user's input area or resize an image.

## Patentansprüche

1. Verfahren zum Eingeben einer Mehrpunkteingabe, das Verfahren umfassend:
Erfassen einer Mehrpunkteingabe, die durch ein erstes Eingabemittel erzeugt wird;
Extrahieren von Koordinaten der Mehrpunkteingabe;
Ausschließen zumindest einer Koordinate von den Koordinaten;
Bestimmen, ob ein Schwebezustand des ersten Eingabemittels erfasst ist;
wenn der Schwebezustand über einem Schwebepunkt erfasst wird, Konfigurieren eines Erkennungsbereichs basierend auf dem Schwebepunkt;
Bestimmen einer Richtung, in die das erste Eingabemittel innerhalb des Erkennungsbereichs verschoben ist;
Bestimmen einer Funktion, die der Richtung zugehörig ist; und
Ausführen der Funktion.

2. Verfahren nach Anspruch 1, wobei das Ausschließen der zumindest einen Koordinate umfasst:
Ausschließen zumindest einer Koordinate unter den Koordinaten entsprechend einem zweiten Eingabemittel, basierend auf einer Koordinate entsprechend dem ersten Eingabemittel.

3. Verfahren nach Anspruch 2, wobei das Ausschließen der zumindest einen Koordinate umfasst:
Ausschließen zumindest einer nachfolgenden Koordinate, die einen Bereich bildet, der größer oder gleich einem vorkonfigurierten Schwellenbereich ist.

4. Verfahren nach Anspruch 1, wobei das Erfassen der Mehrpunkteingabe umfasst:
Erfassen der Mehrpunkteingaben, die zeitgleich oder aufeinanderfolgend gemeinsam erzeugt werden.

5. Verfahren nach Anspruch 2, ferner umfassend ein Erfassen einer Bewegung des zweiten Eingabemittels, während sich das erste Eingabemittel innerhalb des Erkennungsbereichs befindet.

6. Verfahren nach Anspruch 1, wobei das Ausführen der Funktion umfasst:
Ausführen zumindest einer Funktion unter Funktionen zum Wechseln einer Symbolanzeige, einer Menüanzeige oder eines Stifttyps gemäß dem Wischbetrieb des ersten Eingabemittels; und
Kopieren und Einfügen eines Bilds oder Textes gemäß dem Betrieb, in dem sich das erste Eingabemittel in die bestimmte Richtung bewegt.

7. Verfahren nach Anspruch 5, wobei die Bewegung des zweiten Eingabemittels zumindest eines von einem Einzelberührungsbetrieb des zweiten Eingabemittels und einem Mehrfachberührungsbetrieb des zweiten Eingabemittels umfasst.

8. Verfahren nach Anspruch 7, wobei das Ausführen der Funktion umfasst:
Löschen eines Bilds oder Weichzeichnen eines Bilds gemäß dem Einzelberührungsbetrieb des zweiten Eingabemittels; und
Erweitern eines Anwendereingabebereichs oder Vergrößern oder Reduzieren eines Bilds gemäß dem Mehrfachberührungsbetrieb des zweiten Eingabemittels.

9. Verfahren nach Anspruch 1, ferner umfassend:
Erfassen einer Eingabe, die durch ein zweites Eingabemittel erzeugt wird, und in Antwort auf ein Erfassen der Eingabe durch das zweite Eingabemittel,
Ausführen eines Betriebs entsprechend der Eingabe des zweiten Eingabemittels.

10. Elektronische Vorrichtung (100), umfassend:
eine Eingabeeinheit (110), die konfiguriert ist, eine Mehrpunkteingabe zu erfassen, die durch ein erstes Eingabemittel erzeugt wird; und
eine Steuerung (120), die konfiguriert ist zum:
Extrahieren von Koordinaten der Mehrpunkteingabe,
Ausschließen zumindest einer Koordinate von den Koordinaten,
Bestimmen, ob ein Schwebezustand des ersten Eingabemittels erfasst ist,
wenn der Schwebezustand über einem Schwebepunkt erfasst wird, Konfigurieren eines Erkennungsbereichs basierend auf dem Schwebepunkt,
Bestimmen einer Richtung, in die das erste Eingabemittel innerhalb des Erkennungsbereichs verschoben ist,
Bestimmen einer Funktion, die der Richtung zugehörig ist, und
Ausführen der Funktion.

11. Elektronische Vorrichtung nach Anspruch 10,
wobei die Steuerung ferner konfiguriert ist, Koordinaten auszuschließen, die dem zweiten Eingabemittel zugehörig sind.

12. Elektronische Vorrichtung nach Anspruch 10,
wobei die Eingabeeinheit ein oder mehr Eingabefelder enthält und
wobei die Eingabeeinheit ferner konfiguriert ist, die Mehrpunkteingabe durch das eine oder die mehreren Eingabefelder zu erfassen.

13. Elektronische Vorrichtung nach Anspruch 10,
wobei die Steuerung ferner konfiguriert ist, zumindest eine nachfolgende Koordinate zu extrahieren und auszuschließen, die einen Bereich bildet, der größer oder gleich einem vorkonfigurierten Schwellenbereich ist.

14. Elektronische Vorrichtung nach Anspruch 13,
wobei die Eingabeeinheit ferner konfiguriert ist zum:
Erfassen einer Bewegung des ersten Eingabemittels im Schwebezustand oder
Erfassen einer Bewegung des zweiten Eingabemittels, während das erste Eingabemittel im Schwebezustand ist,
wobei die Steuerung ferner konfiguriert ist zum:
wenn ein Koordinatenbewegungsbetrieb des erfassten ersten Eingabemittels einem Wischbetrieb entspricht, Wechseln zumindest einer von einer Symbolanzeige, Menüanzeige und einem Stifttyp,
wenn der Koordinatenbewegungsbetrieb des erfassten ersten Eingabemittels einer Bewegung in einer bestimmten Richtung entspricht, Kopieren und Einfügen eines Bilds oder eines Textes,
wenn ein Koordinatenbewegungsbetrieb des erfassten zweiten Eingabemittels einem Einzelberührungsbetrieb entspricht, Löschen eines Bilds oder Weichzeichnen eines Bilds, und
wenn der Koordinatenbewegungsbetrieb des erfassten zweiten Eingabemittels einem Mehrfachberührungsbetrieb entspricht, Erweitern eines Anwendereingabebereichs oder Anpassen der Größe eines Bilds.

## Revendications

1. Procédé pour la saisie d'une saisie multipoints, le procédé comprenant de :
détecter une saisie multipoints générée par un premier de moyens de saisie ;
extraire des coordonnées de la saisie multipoints ;
exclure au moins une coordonnée des coordonnées ;
déterminer si un état en suspens du premier moyen de saisie est détecté ;
lorsque l'état en suspens a été détecté sur un point en suspens, configurer une zone de reconnaissance sur la base du point en suspens ;
déterminer une direction dans laquelle le premier moyen de saisie est déplacé à l'intérieur de la zone de reconnaissance ;
déterminer une fonction associée à la direction ; et
exécuter la fonction.

2. Procédé selon la revendication 1, dans lequel l'exclusion d'au moins une coordonnée comprend de :
exclure au moins une coordonnée parmi les coordonnées correspondant à un second moyen de saisie sur la base d'une coordonné correspondant au premier moyen de saisie.

3. Procédé selon la revendication 2, dans lequel l'exclusion d'au moins une coordonnée comprend de :
exclure au moins une coordonnée consécutive formant une zone qui est plus grande que ou égale à une zone de seuil préconfigurée.

4. Procédé selon la revendication 1, dans lequel la détection de la saisie multipoints comprend de :
détecter les saisie multipoints générées toutes ensemble simultanément ou séquentiellement.

5. Procédé selon la revendication 2, comprenant en outre de détecter un mouvement du second moyen de saisie alors que le premier moyen de saisie est à l'intérieur de la zone de reconnaissance.

6. Procédé selon la revendication 1, dans lequel l'exécution de la fonction comprend de :
exécuter au moins une fonction parmi les fonctions de commutation d'un affichage d'icône, un affichage de menu ou un type de crayon selon l'opération de chiquenaude du premier moyen de saisie ; et
dans laquelle le premier moyen de saisie se déplace dans la direction spécifique.

7. Procédé selon la revendication 5, dans lequel le mouvement du second moyen de saisie comprend au moins une d'une opération à contact tactile unique du second moyen de saisie et une opération à contacts tactiles multiples du second moyen de saisie.

8. Procédé selon la revendication 7, dans lequel l'exécution de la fonction comprend de :
effacer une image ou flouter une image selon l'opération à contact tactile unique du second moyen de saisie ; et
agrandir une zone de saisie d'utilisateur ou agrandir ou réduire une image selon l'opération à contacts tactiles multiples du second moyen de saisie.

9. Procédé selon la revendication 1, comprenant en outre de :
détecter une saisie générée par un second moyen de saisie, et en réponse à la détection de la saisie par le second moyen de saisie,
exécuter une opération correspondant à la saisie du second moyen de saisie.

10. Dispositif électronique (100) comprenant :
une unité de saisie (110) configurée pour détecter une saisie multipoints générée par un premier moyen de saisie ; et
un contrôleur (120) configuré pour :
détecter une saisie multipoints générés par un premier de moyens de saisie ;
extraire des coordonnées de la saisie multipoints ;
exclure au moins une coordonnée des coordonnées ;
déterminer si un état en suspens du premier moyen de saisie est détecté ;
lorsque l'état en suspens a été détecté sur un point en suspens, configurer une zone de reconnaissance sur la base du point en suspens ;
déterminer une direction dans laquelle le premier moyen de saisie est déplacé à l'intérieur de la zone de reconnaissance ;
déterminer une fonction associée à la direction ; et
exécuter la fonction.

11. Dispositif électronique selon la revendication 10, dans lequel le contrôleur est en outre configuré pour exclure les coordonnées associées à un second moyen de saisie.

12. Dispositif électronique selon la revendication 10, dans lequel l'unité de saisie inclut un ou plusieurs plots de saisie, et dans lequel l'unité de saisie est en outre configurée pour détecter la saisie multipoints par l'intermédiaire d'un ou plusieurs plots de saisie.

13. Dispositif électronique selon la revendication 10, dans lequel le contrôleur est en outre configuré pour extraire et exclure au moins une coordonnée consécutive formant une zone qui est plus grande que ou égale à une zone de seuil préconfigurée.

14. Dispositif électronique selon la revendication 13, dans lequel l'unité de saisie est en outre configurée pour :
détecter un mouvement du premier moyen de saisie dans l'état en suspens, ou
détecter un mouvement du second moyen de saisie alors que le premier moyen de saisie est dans l'état en suspens,
dans lequel le contrôleur est en outre configuré pour :
lorsque l'opération de mouvement de coordonnée du premier moyen de saisie détecté correspond à une opération de chiquenaude, commuter au moins un d'un affichage d'icône, affichage de menu et un type de crayon,
lorsque l'opération de mouvement de coordonnées du premier moyen de saisie détecté correspond à un mouvement dans une direction spécifique, copier et coller une image ou un texte,
lorsque l'opération de mouvement de coordonnées du second moyen de saisie détecté correspond à une opération à contact tactile unique, effacer une image ou flouter une image, et
lorsque l'opération de mouvements de coordonnées du second moyen de saisie détecté correspond à une opération à contacts tactiles multiples, agrandir une zone de saisie d'utilisateur ou redimensionner une image.
